Europäisches Patentamt

European Patent Office

Office européen des brevets

(11) Veröffentlichungsnummer: **0 253 963 B1**

# EUROPÄISCHE PATENTSCHRIFT

(45) Veröffentlichungstag der Patentschrift: **22.07.92**

(51) Int. Cl.⁵: **G01N 22/00**

(21) Anmeldenummer: **87105867.3**

(22) Anmeldetag: **22.04.87**

(54) **Vorrichtung zum Untersuchen von Messgasen mittels Mikrowellen.**

(30) Priorität: **09.07.86 DE 3622956**

(43) Veröffentlichungstag der Anmeldung:
**27.01.88 Patentblatt 88/04**

(45) Bekanntmachung des Hinweises auf die
Patenterteilung:
**22.07.92 Patentblatt 92/30**

(84) Benannte Vertragsstaaten:
**BE CH FR GB IT LI NL SE**

(56) Entgegenhaltungen:

**REV. SCI. INSTRUM., Band 49, Nr. 12, Dezember 1978, Seiten 1712-1715, The American Institute of Physics, New York, US; J.-M. THIEBAUT et al.: "Broadband and low insertion loss stark cell for microwave spectroscopy"**

**REV. SCI. INSTRUM., Band 49, Nr. 4, April 1978, Seiten 526-530, The American Institute of Physics, New York, US; J. LEGRAND et al.: "Microwave spectrometer for saturated absorption experiments"**

(73) Patentinhaber: **KERNFORSCHUNGSZENTRUM KARLSRUHE GMBH**
**Weberstrasse 5 Postfach 3640**
**W-7500 Karlsruhe 1(DE)**

(72) Erfinder: **Berger, Lutz**
**Theodor-Körner-Strasse 34**
**W-7514 Eggenstein(DE)**
Erfinder: **Krieg, Gunther, Prof. Dr.**
**Im Rennich 12**
**W-7500 Karlsruhe(DE)**
Erfinder: **Pappert, Johann**
**Kanalstrasse 5**
**W-7504 Weingarten(DE)**
Erfinder: **Schmitt, Gerhard**
**Sanddornweg 15**
**W-7500 Karlsruhe(DE)**

**Beschreibung**

Die Erfindung betrifft eine Vorrichtung zur Analyse gasförmiger Medien mit mindestens einem Mikrowellensender, mindestens einer Meßzelle mit jeweils mindestens einem Gaseinlaß und einem Gasauslaß und einem Detektor sowie mindestens einer in der Meßzelle gegenüber dieser isoliert angeordneten Hochspannungs-Stark-Elektrode.

Die Analyse gasförmiger Medien, gegebenenfalls nach Überführung auch eines Feststoffs oder einer Flüssigkeit in den gasförmigen Zustand durch Absorption von Mikrowellen in bestimmten charakteristischen Frequenzbereichen durch Anregung von Rotationsübergängen in Molkekülen der zu untersuchenden Medien ist aus Meinke-Gundlach, "Taschenbuch der Hochfrequenztechnik", Springer-Verlag, Berlin, Heidelberg, N.Y., Tokyo, 1986, Seite 824 (Rotationslinien) und aus Gordon M. Barrow, "Physikalische Chemie" Teil II, Friedr. Vieweg + Sohn, Braunschweig, 1972 aus Abschnitt 12.1 (Rotationsspektren) bekannt. Zur Reduzierung der Linienbreite erfolgt die Untersuchung im Niederdruckbereich. Die Absorptionslinien werden mittels Stark-Effekt aufgespalten, wobei vorzugsweise eine Starkwechselspannung angelegt wird, um die Nachweisempfindlichkeit zu erhöhen. Ein derartiges Verfahren ist grundsätzlich hochselektiv, erfordert aber keine vorherigen Veränderungen, wie Ionisation oder chemischen Reaktionen an den zu untersuchenden Stoffen (siehe Gerthsen/kneser, "Physik", 10. Auflage, Springer Verlag Berlin, Heidelberg, N.Y. 1969, Seite 447, 12. Stark-Effekt).

Bei bekannten Vorrichtungen sind die Meßzellen überdimensioniert. Die Überdimensionierung der Absorptionszelle hinsichtlich der angewandten Mikrowellenlänge ist insbesondere dadurch bedingt, daß die Hochspannungs-Stark-Elektroden oder das Stark-Spetum aus Isolationsgründen nur in Zellen mit überdimensionierten Querschnitt eingebracht werden können.

Bemerkungswerte Memory-Effekte sind festgestellt worden, die vermutlich auf Gasanlagerungen an den Wänden zurückzuführen sind, d.h. ein vormalig gemessenes Gas wird nach mehreren Spülungen immer noch detektiert. Das Stark-Septum weist als Träger Materialien, wie Teflon auf, an denen sich Gase adsorbieren können, was ebenfalls zur Verstärkung von Memory-Effekten führt. Auch sind Gaszuführungen und Fortführungen nachteilig ausgebildet und weisen erhebliche Toträume auf, was ebenfalls Memory-Effekte verstärkt.

In Rev. Sci. Instrum., 49(12) Dec. 1978 auf den Seiten 1712-1715 ist unter dem Titel "Broadband and low insertion loss stark cell for microware spectroscopy" von Jean-Marie Thiebaut et al. eine Nutleiter Zelle für Stark-Modulations-Spektroskopie im Aufbau und Mikrowellenverhalten beschrieben. Die Zelle besteht aus einem Metallgehäuse, in dem zwei parallele Kupferplatten über Glasperlen zu diesem und gegenseitig auf Abstand gehalten werden. Die beiden Platten haben entlang ihrer Achse auf der gegenseitig zugewandten Seite eine gleiche Nut vorgegebener Abmessung. In dem Raum zwischen diesen findet die Fortpflanzung der Mikrowelle statt.

Die Erfindung liegt die Aufgabe zugrunde, eine Vorrichtung zur Analyse gasförmiger Medien mittels Mikrowellenspektroskopie zu schaffen, bei der sich das Starkseptum im Mikrowellenhohlleiter in definierter Lage befindet und Gasanlagerungen an den dortigen Baukomponenten vermieden oder mindestens erheblich reduziert werden.

Erfindungsgemäß wird die genannte Aufgabe bei einer Vorrichtung zur Analyse gasförmiger Medien mit mindestens einem Mikrowellensender, mindestens einer Meßzelle mit jeweils mindestens einem Gaseinlaß und einem Gasauslaß und einem Detektor sowie mindestens einer in der Meßzelle gegenüber dieser isoliert angeordneten Hochspannungs-Stark-Elektrode dadurch gelöst, daß die Stark-Elektrode mittels mehrerer mit Abstand zueinander angeordnete Halter in der Zelle gehalten ist. Damit werden die Anlagerungsmöglichkeiten für die Gase wesentlich reduziert. Die Halter bestehen aus Keramikmaterial, vorzugsweise Glaskeramik. Es kann auch ein unter dem Namen Vespel® bekanntes Material der Firma DU PONT eingesetzt werden. Während beim Stand der Technik, wie dargelegt, als Träger für das Stark-Septum ein Teflon-Band verwendet wird, auf dem die Hochspannungs-Stark-Elektroden aufgebracht sind und das Band auf eine Seitenwand, beispielsweise den Boden der Zelle aufgelegt und aufgeklebt wird, sieht die Erfindung vorzugsweise keramische Träger vor, die im Gegensatz zum Teflon eine Anlagerung von Gasen, insbesondere bei Ausbildung als Glaskeramikträgern nicht unterstützen. Die Verwendung von Isolationsträgern aus Glaskeramik ermöglicht darüberhinaus den Einsatz der erfindungsgemäßen Vorrichtung bei wesentlich höheren Temperaturen, bis beispielsweise auf 250 Grad C. Es können insbesondere eine Vielzahl von Einzelhaltern mit Abständen in der Zelle befindlichen Stark-Elektrode angebracht sein, um diese zu halten. Vorzugsweise ist vorgesehen, daß die Höhe der Halter der Innenhöhe der Zelle entspricht, wobei insbesondere die Halter grundsätzlich als Plättchen ausgebildet sind und auf der Mitte ihrer Höhe mindestens einen horizontalen Schlitz zur Aufnahme eines Randes der Hochspannungs-Stark-Elektrode aufweisen. Bei dieser Ausgestaltung wird im Gegensatz zu den genannten Stand der Technik die Stark-Elektrode in der Mitte der Zelle gehalten, so daß sich von hieraus nach beiden Richtungen die Stark-Felder ausbilden, was zu einer Homogenisierung des Feldes in der Zelle führt. Damit die einzelnen Abstandshalterstücke sich nicht relativ zur Stark-Elektrode verschieben, sieht eine weitere Ausbildung vor, daß die Stark-Elektrode in ihren Rändern Ausnehmungen aufweist, in die ein Vorsprung des Halters eingreift.

Die vorgenannten Ausgestaltungen geben insbesondere eine Möglichkeit zu weiterer erfindungsgemäßer Ausbildung dahingehend, daß der Querschnitt der Zellen an die verwendete Mikrowellenfrequenz angepaßt (nicht überdimensioniert) ist, wobei insbesondere der Zellenquerschnitt < 10 mm x 5 mm ist und vorallem der Zellenquerschnitt etwa 7 mm x 3,5 mm vorzugsweise 7,1 mm x 3,6 mm beträgt. Durch diese Ausbildung wird erreicht, daß Sender, Empfänger, Abschwächer, gegebenenfalls Hohlleiterschalter und auch Referenz- und Meßzellen sämtlich den gleichen Hohlleiterquerschnitt besitzen, so daß keine Querschnittsübergänge mit Tapern oder dergleichen erforderlich sind, wie dies beim Stand der Technik der Fall ist. Die gewählten kleinen Zellenquerschnitte führen bei Stark-Modulation zu einer besseren Ausmodulation der Rotationsübergänge und damit zu einer größeren Nachweisempfindlichkeit. Die Referenzzelle gleicht im Aufbauprinzip der Meßzelle.

Eine weitere äußerst bevorzugte Ausbildung sieht vor, daß die Meßzelle mäanderförmig in Bogenstücken und geraden Meßstücken (Stark-Kammern 14) geführt ist. Durch die mäanderförmige Ausbildung können gegenüber andersartigen Ausbildungen beliebig viele Bogenstücke und Geradestücke hintereinander angeordnet werden, um eine optimale Anpassung bei dennoch kompakter Bauweise zu erreichen. Es kann insbesondere derart ohne Signalintensitätsverlust ein mechanischer Aufbau erreicht werden, der in ein sogenanntes 19-Zoll-Rack hineinpaßt.

Bei der Zuführung des Gases in Meß- und Referenzzellen ergibt sich das Problem, daß einerseits die Öffnungen zur Zuführung des Gases in den Hohlleiter einen beschränkten Querschnitt aufweisen sollen, um die Mikrowelle nicht zu stören, andererseits aber hinreichend groß sein sollen, um einen schnellen Gasaustausch bei Wechsel des Gases zu ermöglichen, damit kleine Ansprechzeiten und damit eine Vielzahl von Messungen in beschränkter Zeit möglich sind. Weiterhin soll die Gaszuführung einfach und nicht aufwendig sein.

Zur Lösung der vorgenannten Problematik sieht die Erfindung vor, daß Gaseinlaß und/oder -auslaß in zwei Seitenwänden einander gegenüberliegende mit der Längsachse des Einlaß- bzw. Auslaßstücks fluchtende Schlitze aufweisen, wobei insbesondere die Schlitze eine Länge von ca. 10 mm und eine Breite von ca. 0,5 mm aufweisen. Hiermit wird erreicht, daß die Mikrowelle kaum beeinträchtigt wird und dennoch das Meßgas durch die schlitzartige Ausbildung der Schlitze und der Anordnung von jeweils zwei Schlitzen hinreichend schnell ausgetauscht werden kann. Zur Zuführung und Fortführung des Meßgases zu bzw. von den Schlitzen, sieht eine Weiterbildung vor, daß die Seitenwände vom Einlaß bzw. Auslaß im Bereich der Schlitze durch eine Kammer übergriffen sind, an die eine Gaszu-/Abführung angeschlossen ist.

Die Austauschgeschwindigkeit des Meßgases beim Wechsel desselben wird weiterhin dadurch unterstützt, daß ein Einlaßventil mit einem Einlaß und einem Auslaß und einem zwischen beiden angeordneten Strömungsweg ausgebildet ist, von dem unter einem endlichen Winkel, vorzugsweise 90 Grad, ein Abzweigweg zum Einlaß der Meßzelle abgezweigt ist, wobei ein derartiges Ventil entweder mechanisch oder elektrisch gesteuert werden kann. Das Meßgas wird hier mit hoher Geschwindigkeit an der durch die beschriebenen Merkmale geschaffenen Schnittstelle zwischen dem Hochdruckbereich meßgasseitig und dem Niederdruckbereich im Hohlleiter oder der Meßzelle vorbeiströmen gelassen. Nur ein geringer Teil des vorbeiströmenden Gases gelangt in die Meßzelle. Totzeiten aufgrund von Totvolumina können ebenfalls derart weitgehend vermieden werden.

Durch die vorstehende Ausbildung können auch Schwankungen der Pumpleistung des Vakuum-Systems in einem solchen Umfang ausgeglichen werden, wie dies für die Meßzelle hinreichend ist.

Wenn eine Referenzzelle zur Stabilisierung der Mikrowellenfrequenz eingesetzt wird, in der insbesondere mit dem Nulldurchgang eines durch eine reduzierte Stark-Spannung erzeugten Referenzsignals gearbeitet wird, wobei der Nulldurchgang durch Vermessung der eigentlichen Null-Absorptionslinie und der Stark-Komponenten mit einer Phasenverschiebung um 180 Grad durch eine Lock-in-Technik bedingt ist, so ist eine weitergehende Druckstabilisierung notwendig.

Bei den gleichen Voraussetzungen, wie sie etwas weiter oben genannt wurden, daß nämlich eine Referenzzelle vorgesehen ist, sieht eine äußerst bevorzugte Ausgestaltung vor, daß Referenz- und Meßzelle in Reihe geschaltet sind. In der Regel befindet sich dabei die Referenzzelle vom Sender aus gesehen vor der Meßzelle, um das Nutzsignal nicht zu vermindern. Diese Maßnahme unterstützt ebenfalls den kompakten Aufbau der gesamten Vorrichtung, erleichtert eine Thermostatisierung der Zellen, erspart den Einsatz von teueren Richtkopplern, vermeidet eine Trennung und damit Schwächung des Signals in zwei Zweige. Sie ermöglicht weiterhin die Erfassung von Referenz- und Meßsignal mit einem Detektor und vorzugsweise auch Weiterverarbeitung mit einem Vorverstärker, wenn Referenz- und Meßsignal durch phasenverschobene Stark-Spannungen ebenfalls eine Phasendifferenz erhalten. Durch die Verwendung eines Vorverstärkers werden insbesondere Driftprobleme sowie Probleme eliminiert, die sich durch die Phasendrehung zweier Verstärker ergeben.

Wenn mehrere Absorptionsfrequenzen untersucht werden sollen, so kann vorgesehen sein, daß mehrere Mikrowellensender unterschiedlicher Frequenz einer Meßzelle zugeordnet sind, wobei, um ein Auswechseln des Reingaserzeugers, beispielsweise ein Permeationssystem, in der Referenzzelle zu vermeiden, in Weiterbildung vorgesehen sein kann, daß mehrere Referenzzellen einer Meßzelle zugeordnet sind, wobei entweder die Referenzzellen in Reihe geschaltet sind oder aber die Referenzzellen einander parallel geschaltet sind. Bei derartigen Mehrkomponentensystemen, müssen die Mikrowellensender, die vorzugsweise Gunn-Oszillatoren aufweisen, über entsprechende Hohlleiterschalte entweder direkt auf die erste Referenzzelle oder nach parallel geordneten Referenzzellen auf die gemeinsamen Meßzelle geschaltet werden. Wesentlich ist, daß ansonsten die gesamte Anordnung, insbesondere auch die Auswerteelektronik vor allem mit einem Detektor und einem Vorverstärker gleichbleibt und lediglich mit den Sendern auch die Stark-Spannungen in den Meß- bzw. Referenzzellen umgeschaltet werden müssen. Die Messungen der verschiedenen Komponenten erfolgt durch Ansteuern des jeweiligen Senders und Anlegen der jeweiligen Stark-Spannungen, wodurch allerdings Umschaltzeiten bedingt sind. Insbesondere bei Messungen von zwei Komponenten wird daher bevorzugt vorgesehen, daß zwei Sender vorgesehen sind, die über Schalter der Meßzelle zugeschaltet werden können und zwar die Referenzzellen in Reihe, gemeinsam oder parallel zur Meßzelle angeordnet sind, daß die Referenzzellen mit phasenverschobenen Stark-Spannungen beaufschlagt werden und die Sender jeweils separat geregelt werden. Im Gegensatz zur vorgenannten Lösung ist die genannte Frequenzlockung beider Sender möglich, was die Zeitverzögerung durch jeweils erneute Frequenzsynchronisation vermeidet.

Da sich herausgestellt hat, daß der obengenannte Null-Durchgang des Mikrowellenabsorptionssignals druckabhängig ist, ist insbesondere für die Referenzmessung eine Druckregelung vorgesehen. Ein erfindungsgemäßes Verfahren zur Druckregelung zeichnet sich dadurch aus, daß der Zellenquerschnitt etwa 7 mm x 3,5, mm vorzugsweise 7,1 mm x 3,6 mm beträgt. Das erfindungsgemäße System ist insbesondere vorteilhaft, weil bei dem beiderseitigen Unterdruck eine konventionelle Druckregelung über elektrisch gesteuerte Ventile oder dergleichen nicht möglich ist. Das erfindungsgemäße Druckregelungsverfahren ist einfach, da die Druckregelung über eine definierte Verdampfung der zu messenden Reinkomponente erfolgt. Fällt der Druck aufgrund von Schwankungen beim Absaugen, wie durch eine Pumpe ab, so wird durch eine stärkere Heizung der Reinkomponente eine stärkere Verdampfung derselben und damit eine Druckerhöhung bewirkt; bei Druckanstieg wird entweder die Temperatur erniedrigt oder aber eine Kühlung durchgeführt, so daß die Verdampfung reduziert wird und insgesamt der Druck in der Zelle erniedrigt wird. Das Gas wird vorzugsweise aus der Zelle mit konstanten Durchfluß abgesaugt. Bei konstant arbeitender Absaugpumpe, wird ein konstanter Durchfluß dadurch erreicht, daß im Absaugweg eine Kapillare angeordnet ist. Weiterhin kann vorgesehen sein, daß dem Ausgang und der Referenzzelle Filter nachgeordnet sind. Das Filter absorbiert die zu messende Komponente und verhindert bei einem Vakuumsystem derart, daß die Reinkomponente in die Meßzelle gelangt und dort das Meßergebnis verfälschen könnte.

Eine bevorzugte Ausführungsform sieht vor, daß Referenz- und Meßzellen eine gemeinsame Thermostatisierung aufweisen. Hierdurch entfällt eine thermische Isolation zwischen Referenz- und Meßzelle.

Weitere Vorteile und Merkmale der Erfindung ergeben sich aus den Ansprüchen und aus der nachfolgenden Beschreibung, in der wesentliche Merkmale der Erfindung unter Bezugnahme auf die Zeichnungen im einzelnen erläutert sind. Dabei zeigt:

Fig. 1    eine prinzipielle Darstellung des mechanischen Gesamtaufbaus der erfindungsgemäßen Vorrichtung;

Fig. 2    das Stark-Septum in Aufsicht, wobei an einer Stelle ein Isolierhalter angebracht ist;

Fig. 3    der Isolierhalter in Seitenansicht;

Fig. 4    eine Darstellung zum Einlaß bzw. Auslaß des Gases in bzw. aus einer Zelle;

Fig. 5    die Ventilanordnung zur Zuführung des Meßgases zur Meßzelle;

Fig. 6    eine Darstellung zur Erläuterung der Druck- und Temperaturregelung;

Fig. 7    ein Blockschaltbild eines bevorzugten Mehrkomponentensystems; und

Fig. 8    ein Blockschaltbild eines Zweikomponentensystems.

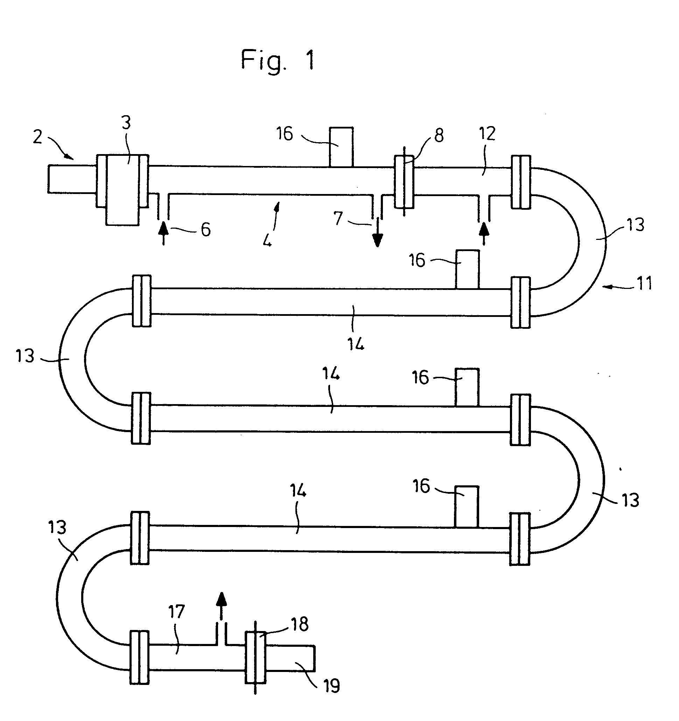

Figur 1 zeigt den prinzipiellen mechanischen Aufbau der erfindungsgemäßen Vorrichtung oder des erfindungsgemäßen Mikrowellen-Prozeß-Analysators 1. Er weist einen Mikrowellensender 2, einen hinter diesem angeordneten Isolator 3, eine darauf folgende Referenzzelle 4 mit Einlaß 6 und Auslaß 7 für das Referenzgas auf. An die Referenzzelle 4 schließt sich ein isolierendes Fenster 8 an. Dem folgt die Meßzelle 11, die zunächst einen Gaseinlaß 12 aufweist. Die Meßzelle 11 ist zur Vermeidung großer Baulängen mäanderförmig geführt und in jeweils mehrere 180 Grad-Bögen 13 und gerade Stark-Kammern 14 unterteilt. Die Stark-Kammern 14 weisen in herkömmlicher Weise isolierte Stark-Spannungs-Zuführungen 16 auf.

Schließlich schließt sich an einen Gasauslaß 17 der Meßzelle 11 über ein weiteres isolierendes Fenster 18 ein Detektor 19 an.

Der Querschnitt der Meßzelle 11 und insbesondere der Stark-Kammern 14 ist auf den jeweiligen Mikrowellenbereich, in dem die Vorrichtung arbeiten soll, optimiert und insbesondere, wenn nur eine Frequenz analysiert werden soll, hierauf abgestimmt. Der Querschnitt beträgt vorzugsweise 7,1 mm x 3,6 mm, ist also nicht überdimensioniert.

Der Mikrowellensender 2 weist vorzugsweise einen Gunn-Oszillator auf. Wenn mehrere Gaskomponenten analysiert werden sollen, so können mehrere Sender über jeweils entsprechende Hohlleiterschalter auf gemeinsame Meß-/Referenzzellen geschaltet werden, wobei gegebenenfalls eine Referenzzelle solche zu untersuchenden Komponenten enthält. Die Stark-Spannungen in der Meß- bzw. Referenzzelle werden entsprechend den Sendern zugeschaltet. Es kann bei einem Mehrkomponenten-System auch vorgesehen sein, daß, wenn die jeweilige Komponente für die Referenzzelle rein bereit gestellt wird, mehrere Referenzzellen hinter den ihnen jeweils zuzuordnenden Sendern zueinander parallel oder aber sämtlich in Reihe geschaltet sind und entsprechend der jeweils vorzunehmenden Messung zugeschaltet werden.

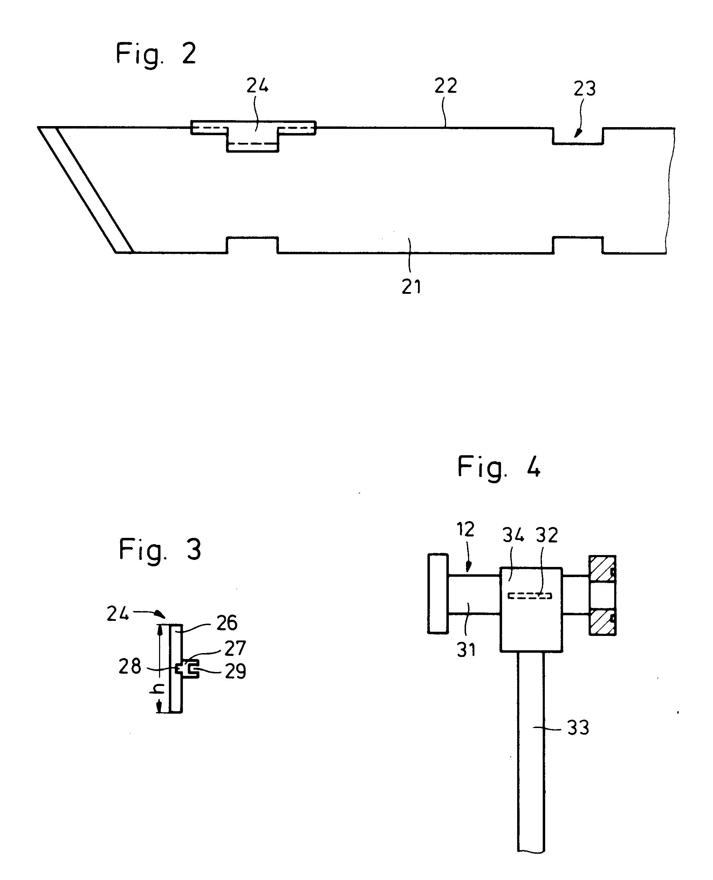

Das Stark-Septum und seine Halterung ist in den Figuren 2 und 3 dargestellt. Das den Innenleiter bildende Stark-Septum 21 muß jeweils in die entsprechende, die Außenleiter bildende Stark-Kammer isoliert eingesetzt werden. Hierzu weist das Septum an seinen Längskanten 22 Einschnitte 23 auf, an denen Isolierhalter 24 angreifen, die vorzugsweise aus Glaskeramik bestehen. Durch die Einschnitte 23 werden Septum 21 und Isolierhalter 24 in Längsrichtung zueinander festgelegt.

Die Isolierhalter 24 weisen eine der Höhe der Stark-Kammer 14 entsprechende Höhe h auf und bestehen aus einer Platte 26, an der mittig ein in die Ausschnitte 23 eingreifender Vorsprung 27 angebracht ist. In der Platte 26 und in dem Vorsprung 27 sind jeweils Schlitze 28, 29 in der gleichen Ebene ausgebildet, die nach Zusammenstecken von Septum 21 und Halter 24 den Rand 22 des Septums umgreifen, so daß dieses auch senkrecht zu seiner Fläche fixiert ist. Das Septum wird mit den angesetzten Haltern 24 in die einzelnen Stark-Kammern eingeschoben.

Durch die Stark-Kammer 14 und das Septum 21 wird die erforderliche Stark-Kapazität gebildet. Die Stark-Spannungszuführung 16 ist derart ausgebildet, daß sie eine die Kapazität der Stark-Elektrode 21 zu einem Parallel-Schwingkreis erweiternden externen Induktivität aufweist, die wiederum gleichzeitig die Hochspannungswicklung eines Transformators ist.

Gleichzeitig wird durch die Serienschaltung einer Kapazität, die sehr viel größer ist als die Kapazität der Starkzellen, in den Schwingkreis und durch Einbau einer Diode mit Vorwiderstand parallel zur Starkkapazität eine Anhebung der Starkwechselspannung derart erreicht, daß der negative Scheitelwert der Wechselspannung auf 0 Volt aufsitzt.

Ein Problem bei derartigen Mikrowellenanalysatoren ist die gleichmäßige Einführung der Gase, insbesondere des Meßgases in die Kammern sowie die Herausführung in hinreichender Menge in kurzer Zeit, damit ein schneller Austausch des Gases und Erzielung kurzer Meßzeiten. Die Erfingung sieht hierzu vor, daß die Einläße und Ausläße 6, 7, 12, 17 in zwei gegenüberliegenden Seitenwänden 31 über der Mittelachse jeweils gegenüberliegend einen Längsschlitz 32 aufweisen (Figur 4), zu dem und durch den das Gas von einer Zuführung 33 her über eine das Rohr des Auslaßes 12 etc. manchettenartig übergreifende Kammer 34 erfolgt. Es hat sich herausgestellt, daß durch derartig mit zwei Schlitzen ausgebildete Einläße bzw. Ausläße, hohe Gaswechselfrequenzen möglich sind.

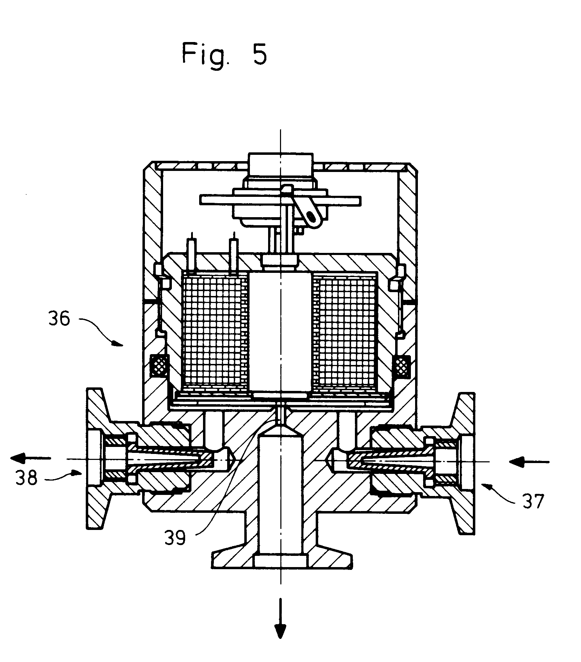

Die Zuführungsleitung 33 ist weiterhin mit einem sogenannten Kreuzventil 36 verbunden, wie es in der Figur 5 dargestellt ist. Das der jeweiligen Meßkammer 14 zuzuführende Gas wird im Ventil von einem von dessen Einlaß 37 zu dessen Auslaß 38 führenden Gashauptweg geöffnetem Ventil über einen Nebenzweig 39 abgezweigt. Hierdurch werden Totvolumina reduziert, die ebenfalls zu hohen Ansprechzeiten führen.

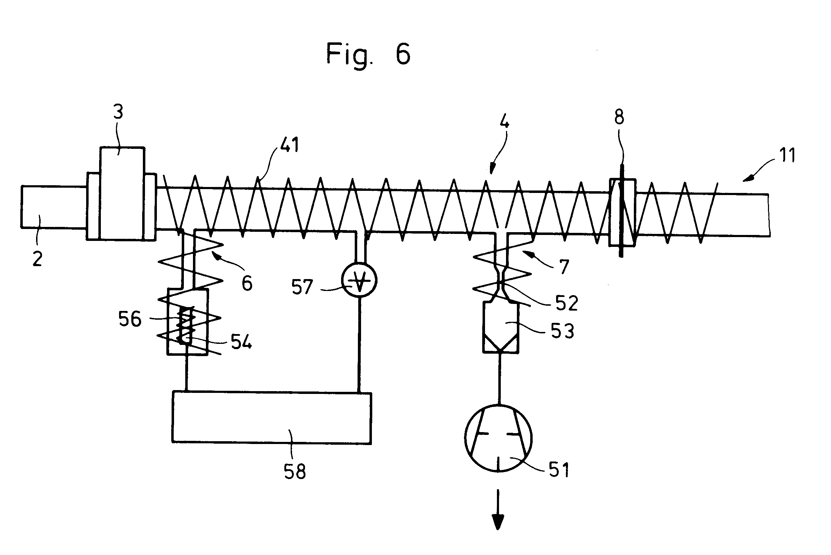

Figur 6 zeigt schematisch, wie die Referenzzelle 4 und die Meßzelle 11 von einer gemeinsamen Heizeinrichtung umgeben sind. Mit dieser wird die Temperatur im Innern der Zellen 4, 11 konstant gehalten. Dadurch kann eine thermische Isolation zwischen diesen entfallen.

Insbesondere in der Referenzzelle ist ein konstanter Druck aufrecht zu erhalten. Hierdurch reicht die bei der Meßzelle 11 vorgenommene Druckregelung einer Nachführung bei einem Regelventil bei Schwankungen der Pumpleistung des Vakuumsystem nicht aus.

Zunächst ist an den Auslaß 7 der Referenzzelle 4 eine herkömmliche Vakuumpumpe 51 angeschlossen. Der Auslaß 7 weist eine Kapillare 52 auf, durch die ein konstanter Gasdurchfluß erreicht wird. Wenn nur ein Vakuumsystem verwendet wird, so ist der Kapillare ein Filter 53 nachgeschaltet, das die zu messende Komponente absorbiert und somit verhindert, daß diese als Reinsubstanz in die Meßzelle gelangt, wo sie die Messung verfälschen würde.

Die für die Meßzelle 4 erforderliche Reinsubstanz wird durch ein diese enthaltenes Permeationsgefäß 54 bereit gestellt, das eine separate Heizung und/oder Kühlung 56 aufweist. Diese wird durch eine mit einem Druckaufnehmer 57 verbundene Druckregelung 58 in der folgenden Weise gesteuert: Wenn die Saugleistung des Vakuumsystems variiert, können trotz der Kapillare 52 Druckschwankungen auftreten. Diese werden über den Druckaufnehmer 57 gemessen, der über die Druckregelung 58 des Permeationsgefäß 54 entweder heizt - wenn der Druck abfällt, um eine verstärkte Permeation der Reinkomponente zu erreichen - oder aber die Heizung reduziert bzw. kühlt - wenn der Druck ansteigt, um so die Permeationsleistung zu verringern. Hierdurch wird eine genaue und zuverlässige Druckregelung erreicht.

Eine relative gute Druckkonstanz ist insbesondere zur Regelung der Mikrowellenfrequenz und damit zu deren Stabilisierung erforderlich.

Die Regelung und damit Stabilisierung der Frequenz des Mikrowellensenders bzw. dessen Gunn-Oszillators erfolgt in der folgenden Weise: Vom Stark-Generator 61 wird eine gegenüber der der Meßzelle 11 zugeleiteten Stark-Spannung phasenverschobene weitere Stark-Spannung, die vorzugsweis um 90 Grad phasenverschoben ist, abgeleitet und der Referenzzelle 4 zugeleitet.

Die eigentliche Intensitätsmessung wird auf dem Maximum der Absorptionslinie vorgenommen und hierzu zur Vermeidung des Einflußes von Leistungsschwankungen im Leistungssättigungsbereich gearbeitet. Dieses Verfahren garantiert schnelle Ansprechzeiten des Meßsystems, benötigt aber entsprechend leistungsstarke Mikrowellensender mit einer Leistung von 20 bis 60 mW.

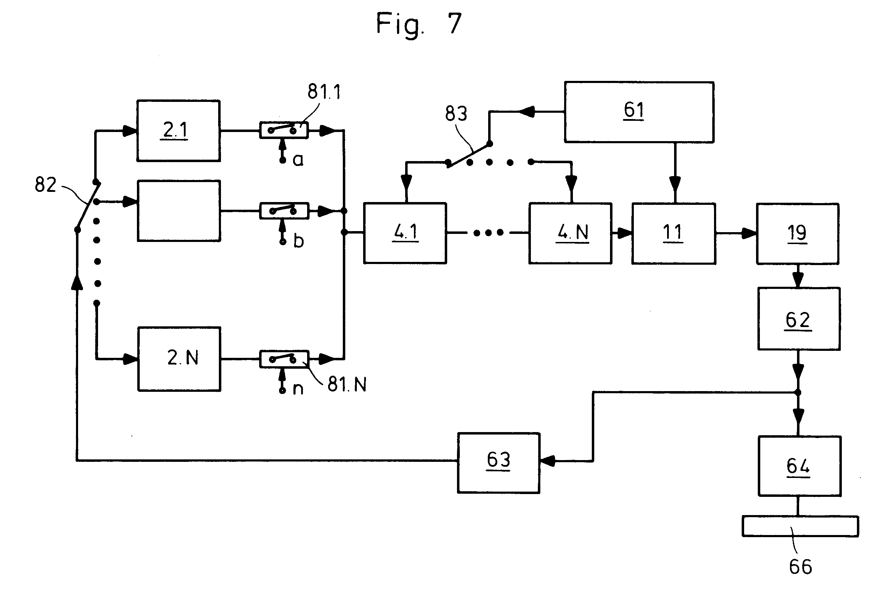

Figur 7 zeigt gegenüber Figur 1 ein erstes Mehrkomponentensystem mit mehreren untereinander und mit der Meßzelle 11 in Reihe geschalteten Referenzzellen 4.1 bis 4.N. Die Referenzzellen 4.1 bis. 4.N werden über Hohlleiterschalter 81.1 bis. 81.N jeweils mit einem abgestimmten Sender 2.1 bis. 2.N verbunden, die über einen Schalter 82 ansteuerbar sind, während die Stark-Spannungen über einen Schalter 83 an die entsprechende Referenzzelle 4.1 anlegbar ist.

Die Messung erfolgt derart, daß zunächst die entsprechend voreingestellte Stark-Spannung über den Schalter 83 an die Referenzzelle 4.1 angelegt und mit dem Schalter 82 der Sender 2.1 angesteuert und dieser über den Hohlleiterschalter 81.1 mit dem Hohlleiter-System verbunden wird, die Messung durchgeführt wird und die Messungen der in den weiteren Referenzzellen enthaltenen Gas-Komponenten sukzessive erfolgen.

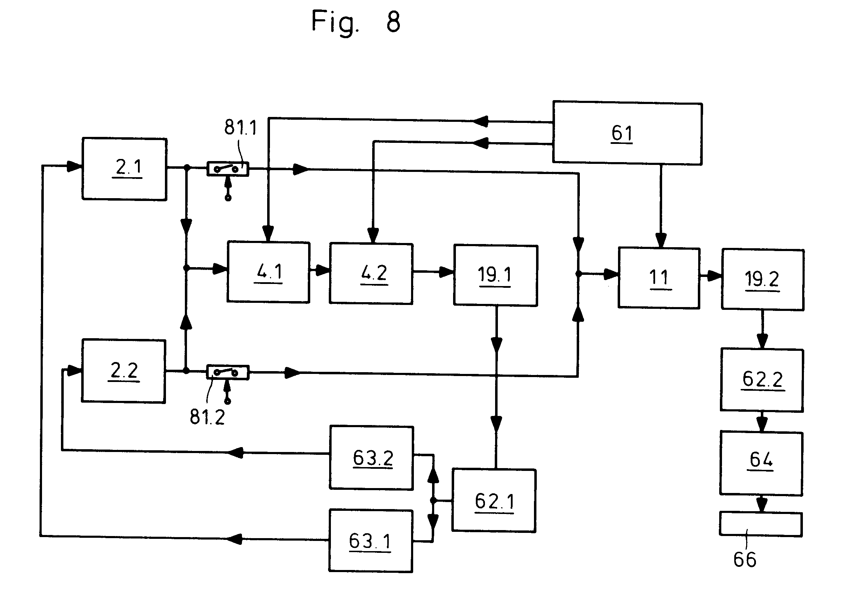

Die bei der vorstehend beschriebenen Ausführungsform aufgrund der nach Umschalten jeweils erforderlichen Frequenzsynchronisation der Sender gegebene Verzögerungszeit, läßt sich bei einer Ausgestaltung nach der Figur 8 vermeiden. Hier sind die beiden Sender 2.1 und 2.2 einerseits mit in Reihe geschalteten Referenzzellen 4.1, 4.2 verbunden, die mit zueinander verschobenen Starkwechselspannungen beaufschlagt werden. Andererseits sind die Sender über Hohlleiterschalter 81.1 und 81.2 wechselweise mit der Meßzelle 11 verbindbar, die nicht durch Anlegen beider Sender überlastet wrden soll. Die Sender 2.1 und 2.2 werden durch die Regler 63.1 und 63.2 in ihrer Frequenz geregelt. Hierbei arbeiten beide Sender permanent und werden auch permanent nachgestimmt, so daß die geeigneten Mikrowellenfrequenz unmittelbar bei Umschalten der Schalter 81.1 und 81.2 an der Meßzelle 11 zur Verfügung steht.

Die Referenzzelle muß nicht in jedem Fall die reine zu untersuchende Komponente selbst enthalten. Bei der Messung hochgiftiger oder explosiver Substanzen kann auch eine andere chemische Verbindung dafür eingesetzt werden. Die Auswahl dieser Referenzverbindung erfolgt danach, daß sie eine Absorptionslinie in unmittelbarer Nähe des gewählten Rotationsübergangs der Meßkomponente haben muß. Durch Anlegen von Gleichspannung(en) - und Überlagerung derselben mit der Starkwechselspannung in Referenz- und/oder Meßzelle lassen sich die S-förmige Kurve der Referenzzelle und die Absorptionslinie in der Weise zueinander verschieben, daß der Nulldurchgang wieder bei der Frequenz des Linienmaximums erfolgt.

Beispiel: Messung von Chlorcyan bei V = 35 825,95 MHz

Die beiden nächstliegenden Absorptionslinien anderer Verbindungen sind:
zu niedrigeren Frequenzen $CH_3SiHDF$ V = 35 825.5 MHz
zu niedrigeren Frequenzen $CH D_2NC$ V = 35 827.44 MHz.

Ein gleichzeitiges Vorliegen der Meßkomponente ClCN und Methyldeuterofluorsilan bzw. Dideuteromethylisocyanid im Meßgas kann ausgeschlossen werden, insofern ist V(ClCn) = 35 825.95 MHz zur quantitativen Bestimmung geeignet. Auf der anderen Seite liegen die Absorptionslinien der partiell deuterierten Verbindungen so nahe, daß sich schon durch Anlegen von geringen Gleichspannungen ein geeigneter Kurvenverlauf ergibt.

## Patentansprüche

1. Vorrichtung zur Analyse gasförmiger Medien mit mindestens einem Mikrowellensender (2), mindestens einer Meßzelle (11) mit jeweils mindestens einem Gaseinlaß (12) und einem Gasauslaß (17) und einem Detektor (19) sowie mindestens einer in der Meßzelle (11) gegenüber dieser isoliert angeordneten Hochspannungs-Stark-Elektrode, dadurch gekennzeichnet, daß die Stark-Elektrode (21) mittels mehrerer mit Abstand zueinander angeordnete Halter (24) in der Zelle gehalten ist und die Halter (24) aus Keramikmaterial, vorzugsweise Glaskeramik, bestehen.

2. Vorrichtung nach Anspruch 1, dadurch gekennzeichnet, daß die Höhe der Halter (24) der Innenhöhe der Zelle (11, 4) entspricht.

3. Vorrichtung nach einem der Ansprüche 1 bis 2, dadurch gekennzeichnet, daß die Halter (24) grundsätzlich als Plättchen ausgebildet sind und auf der Mitte ihrer Höhe mindestens einen horizontalen Schlitz (28, 29) zur Aufnahme eines Randes (22, 23) der Hochspannungs-Stark-Elektrode (21) aufweisen.

4. Vorrichtung nach einem der vorangehenden Ansprüche, dadurch gekennzeichnet, daß die Stark-Elektrode (21) in ihren Rändern (22) Ausnehmungen (23) aufweist, in die ein Vorsprung (27) des Halters (24) eingreift.

5. Vorrichtung nach Anspruch 4, dadurch gekennzeichnet, daß der Zellenquerschnitt < 10 mm x 5 mm ist.

6. Vorrichtung nach Anspruch 6, dadurch gekennzeichnet, daß der Zellenquerschnitt < 8 mm x 4 mm ist.

7. Vorrichtung nach Anspruch 7, dadurch gekennzeichnet, daß der Zellenquerschnitt etwa 7 mm x 3,5, mm vorzugsweise 7,1 mm x 3,6 mm beträgt.

8. Vorrichtung nach einem der vorangehenden Ansprüche, dadurch gekennzeichnet, daß die Meßzelle (11) mäanderförmig in Bogenstücken (13) und geraden Meßstücken (Stark-Kammern 14) geführt ist.

9. Vorrichtung nach einem der vorangehenden Ansprüche, dadurch gekennzeichnet, daß Gaseinlaß und/oder -auslaß (12, 17) in zwei Seitenwänden einander gegenüberliegende mit der Längsachse des Einlaß- bzw. Auslaßstücks fluchtende Schlitze (32) aufweisen.

10. Vorrichtung nach Anspruch 9, dadurch gekennzeichnet, daß die Schlitze eine Länge von ca. 10 mm und eine Breite von ca. 0,5 mm aufweisen.

11. Vorrichtung nach Anspruch 9 oder 10, dadurch gekennzeichnet, daß die Seitenwände (31) vom Einlaß bzw. Auslaß (12, 17) im Bereich der Schlitze (32) durch eine Kammer (34) übergriffen sind, an die eine Gaszu-/Abführung (33) angeschlossen ist.

12. Vorrichtung nach einem der Ansprüche 1 - 11, dadurch gekennzeichnet, daß ein Einlaßventil mit einem Einlaß (37) und einem Auslaß (38) und einem zwischen beiden angeordneten Strömungsweg ausgebildet ist, von dem unter einem endlichen Winkel, vorzugsweise 90 Grad, ein Abzweigweg (39) zum Einlaß (12) der Meßzelle (11) abgezweigt ist.

13. Vorrichtung nach Anspruch 12, dadurch gekennzeichnet, daß das Ventil ein mechanisches ist.

14. Vorrichtung nach Anspruch 13, dadurch gekennzeichnet, daß das Ventil (36) ein elektrisches ist.

15. Vorrichtung nach einem der Ansprüche 1 - 14 dadurch gekennzeichnet, daß eine Referenzzelle (4), mit mindestens einem Gaseinlaß (6) und einem Gasauslaß (7) sowie mindestens einer in der Referenzzelle (4) gegenüber dieser isoliert angeordneten Hochspannungs-Stark-Elektrode versehen ist, über deren Einlaß mit einem Permeationssystem (54) für eine Reingaskomponente verbunden ist, und das Permeationssystem (54) eine Temperiereinrichtung (56) sowie die Referenzzelle (4) einen Druckaufnehmer (57) aufweist, der über eine Druckregeleinrichtung (58) mit der Temperiereinrichtung (56) für das Permeationssystem (54) verbunden ist.

16. Vorrichtung nach Anspruch 15, dadurch gekennzeichnet, daß in dem Gasauslaß (7) der Referenzzelle (4) eine Kapillare (52) zur Durchflußstabilisierung nachgeordnet ist.

17. Vorrichtung nach Anspruch 15 oder 16, dadurch gekennzeichnet, daß dem Ausgang (7) der Referenzzelle (4) Filter (53) nachgeordnet sind.

18. Vorrichtung nach einem der Ansprüche 15 bis 17, dadurch gekennzeichnet, daß Referenz- und Meßzellen (4, 11) von einer gemeinsamen Heizeinrichtung ummantelt sind, über die eine vorgebbare Temperatur in diesen aufrecht erhaltbar ist.

**19.** Vorrichtung nach einem der Ansprüche 1 - 18, dadurch gekennzeichnet, daß mehrere Mikrowellensender (2) unterschiedlicher Frequenz einer Meßzelle (11) zugeordnet sind.

**20.** Vorrichtung nach Anspruch 19, dadurch gekennzeichnet, daß mehrere Referenzzellen (4) einer Meßzelle (11) zugeordnet sind.

**21.** Vorrichtung nach Anspruch 20, dadurch gekennzeichnet, daß die Referenzzellen (4) in Reihe geschaltet sind.

**22.** Vorrichtung nach Anspruch 21, dadurch gekennzeichnet, daß die Referenzzellen (4) einander parallel geschaltet sind.

**Claims**

**1.** Device for analyzing gaseous media, having at least one microwave transmitter (2), at least one measuring cell (11) provided with at least one gas inlet (12) and one gas outlet (17) in each case, and a detector (19), as well as at least one high-voltage Stark electrode, which is disposed in the measuring cell (11) so as to be insulated from the latter, characterised in that the Stark electrode (21) is retained in the cell by means of a plurality of holders (24), which are spaced from one another, and the holders (24) are formed from ceramic material, preferably glass ceramics.

**2.** Device according to claim 1, characterised in that the height of the holders (24) corresponds to the internal height of the cell (11, 4).

**3.** Device according to one of claims 1 to 2, characterised in that the holders (24) are basically small plates and have, halfway up, at least one horizontal slot (28, 29) for receiving an edge (22, 23) of the high-voltage Stark electrode (21).

**4.** Device according to one of the preceding claims, characterised in that the Stark electrode (21) has, in its edges (22), recesses (23) in which engages a projection member (27) of the holder (24).

**5.** Device according to claim 4, charaterised in that the cell cross-section is less than 10 mm x 5 mm.

**6.** Device according to claim 5, characterised in that the cell cross-section is less than 8 mm x 4 mm.

**7.** Device according to claim 6, characterised in that the cell cross-section is approximately 7 mm x 3.5 mm, and preferably 7.1 mm x 3.6 mm.

**8.** Device according to one of the preceding claims, characterised in that the measuring cell (11) extends in a serpentine-like manner in arcuate portions (13) and straight measuring portions (Stark chambers 14).

**9.** Device according to one of the preceding claims, characterised in that gas inlet (12) and/or outlet (17) have slots (32) formed therein, which lie opposite one another in two lateral walls and are in alignment with the longitudinal axis of the inlet and/or outlet portion respectively.

**10.** Device according to claim 9, characterised in that the slots have a length of approx. 10 mm and a width of approx. 0.5 mm.

**11.** Device according to claim 9 or 10, characterised in that the lateral walls (31) of the inlet and outlet respectively (12, 17), in the region of the slots (32), are overlapped by a chamber (34), with which a gas supply/discharge (33) communicates.

**12.** Device according to one of claims 1 - 11, characterised in that an inlet valve is provided with an inlet (37) and an outlet (38) and a flow path, which is disposed between both the inlet and the outlet and from which a branch (39) extending to the inlet (12) of the measuring cell (11) is branched-off at a finite angle, preferably at 90 degrees.

**13.** Device according to claim 12, characterised in that the valve is a mechanical valve.

**14.** Device according to claim 13, characterised in that the valve (36) is an electric valve.

**15.** Device according to one of claims 1 - 14, characterised in that a reference cell (4), having at least one gas inlet (6) and one gas outlet (7), as well as at least one high-voltage Stark electrode, which is disposed in the reference cell (4) so as to be insulated from the latter and is connected, via its inlet, to a permeation system (54) for a purified gas component, and the permeation system (54) has a temperature control means (56), as well as the reference cell (4) having a pressure sensor (57), which is connected to the temperature control means (56) for the permeation system (56) via a pressure control (58).

**16.** Device according to claim 15, characterised in that a capillary tube (52) for throughflow stabilization is downstream of the gas outlet (7) of the reference cell (4).

**17.** Device according to claim 15 or 16, characterised in that filters (53) are downstream of the outlet (7) of the reference cell (4).

**18.** Device according to one of claims 15 to 17, characterised in that reference and measuring cells (4, 11) are surrounded by a common heating means, via which a prescribable temperature is maintainable in said cells.

**19.** Device according to one of claims 1- 18, characterised in that a plurality of microwave transmitters (2), of variable frequency, are associated with one measuring cell (11).

**20.** Device according to claim 19, characterised in that a plurality of reference cells (4) are associated with one measuring cell (11).

**21.** Device according to claim 20, characterised in that the reference cells (4) are connected in series with one another.

**22.** Device according to claim 21, characterised in that the reference cells (4) are connected in parallel with one another.

**Revendications**

**1.** Dispositif d'analyse de milieux gazeux avec au moins un générateur (2) de micro-ondes, au moins une cellule de mesure (11) avec chaque fois au moins une entrée de gaz (12) et une sortie de gaz (17) et un détecteur (19) ainsi qu'au moins une électrode Stark à haute tension dans la cellule de mesure (11), isolée d'elle, caractérisé en ce que l'électrode Stark (21) est maintenue au moyen de plusieurs supports (24) qui y sont disposés à intervalles qui sont de préférence en vitrocéramique.

**2.** Dispositif selon la revendication 1, caractérisé en ce que la hauteur du support (24) correspond à la hauteur interne de la cellule (11, 4).

**3.** Dispositif selon l'une des revendications, caractérisé en ce que les supports (24) sont constitués fondamentalement de plaquettes et qu'ils présentent à mi-hauteur au moins une fente horizontale (28, 29) pour recevoir un bord (22, 23) de l'électrode Stark à haute tension (21).

**4.** Dispositif selon l'une des revendications précédentes, caractérisé en ce que l'électrode Stark (21) présente sur ses bords (22) des évidements (23), dans lesquels vient en prise une saillie (27) du support (24).

**5.** Dispositif selon la revendication 4, caractérisé en ce que la section de cellule est < 10 mm x 5 mm.

**6.** Dispositif selon la revendication 5, caractérisé en ce que la section de cellule est < 8 mm x 4 mm.

**7.** Dispositif selon la revendication 6, caractérisé en ce que la section de cellule est d'environ 7 mm x 3,5 mm, de préférence 7,1 mm x 3,6 mm.

**8.** Dispositif selon l'une des revendications précédentes, caractérisé en ce que la cellule de mesure (11) est en forme de méandres avec des pièces courbes (13) et des pièces droites (chambres Stark 14).

**9.** Dispositif selon l'une des revendications précédentes, caractérisé en ce que l'entrée et/ou la sortie de gaz (12, 17) présentent sur deux parois latérales des fentes (32) alignées face à face par rapport à l'axe longitudinal de la pièce d'entrée ou de sortie.

**10.** Dispositif selon la revendication 9, caractérisé en ce que les fentes présentent une longueur d'environ 10 mm et une largeur d'environ 0,5 mm.

**11.** Dispositif selon la revendication 9 ou 10, caractérisé en ce que les parois latérales (31) de l'entrée ou de la sortie (12, 17) dans le domaine des fentes (32) sont entourées par une chambre (34) à laquelle se raccorde une arrivée ou un départ de gaz (33).

**12.** Dispositif selon l'une des revendications 1-11, caractérisé en ce qu'on constitue une vanne d'entrée avec une entrée (37) et une sortie (38) et entre les deux un trajet d'écoulement, d'où part un trajet de dérivation (39) incliné d'un angle fini, de préférence 90 degrés vers l'entrée (12) de la cellule de mesure (11).

**13.** Dispositif selon la revendication 12, caractérisé en ce que la vanne est mécanique.

**14.** Dispositif selon la revendication 13, caractérisé en ce que la vanne (36) est une électrovanne.

15. Dispositif selon l'une des revendications 1-14, caractérisé en ce qu'une cellule de référence (4) comprend au moins une entrée de gaz (6) et une sortie de gaz (7) ainsi qu'au moins une électrode Stark à haute tension dans la cellule de référence (4) isolée d'elle, dont l'entrée est reliée à un système de perméation (54) pour un composant gazeux pur et que le système de perméation (54) présente un dispositif de thermorégulation (56) et la cellule de référence (4) un capteur de pression (57), qui est relié via un dispositif de régulation de pression (58) à un dispositif de thermorégulation (56) du système de perméation (54).

16. Dispositif selon la revendication 15, caractérisé en ce qu'à la sortie de gaz (7) de la cellule de référence (4) se trouve un capillaire (52) pour stabiliser le débit.

17. Dispositif selon la revendication 15 ou 16, caractérisé en ce qu'un filtre (53) se trouve à la sortie (7) de la cellule de référence (4).

18. Dispositif selon l'une des revendications 15 à 17, caractérisé en ce que les cellules de référence et de mesure (4, 11) sont entourées d'un dispositif commun de chauffage, dans lequel on peut maintenir une température déterminée.

19. Dispositif selon l'une des revendications 1-18, caractérisé en ce que plusieurs générateurs (2) de micro-ondes de différentes fréquences correspondent à une cellule de mesure (11).

20. Dispositif selon la revendication 19, caractérisé en ce que plusieurs cellules de référence (4) correspondent à une cellule de mesure (11).

21. Dispositif selon la revendication 20, caractérisé en ce que les cellules de référence (4) sont branchées en série.

22. Dispositif selon la revendication 21, caractérisé en ce que les cellules de référence (4) sont branchées en parallèle.

Fig. 1

Fig. 2

Fig. 4

Fig. 3

Fig. 5

Fig. 6

Fig. 7

EP 0 253 963 B1

Fig. 8